# FASCICULE DE BREVET EUROPEEN

(11) **EP 2 107 394 B1**
(45) Date de publication et mention de la délivrance du brevet: **14.11.2012**
(21) Numéro de dépôt: 09156221.5
(22) Date de dépôt: 25.03.2009
(51) Int. Cl.: G01V 1/20

(54) **Système d'acquisition de données sismiques en milieu marin, à l'aide de flûtes sismiques couplées à des moyens de détection et/ou de localisation de mammifères marins**
System zur Erfassung seismischer Daten in der Meeresumwelt mit Hilfe von seismischen Flöten, die an Detektions- und/oder Lokalisierungsmittel von Meeressäugetieren gekoppelt sind
System for acquiring seismic data in a marine environment, using seismic streamers coupled with means for detecting and/or locating sea mammals

(30) Priorité: 02.04.2008 FR 0801814
(43) Date de publication de la demande: 07.10.2009
(73) Titulaire: Sercel, 44470 Carquefou (FR)
(72) Inventeur: Ayela, Gérard, 29810 Ploumoguer (FR); Coatelan, Stéphane, 29200 Brest (FR)
(74) Mandataire: Larcher, Dominique

(56) Documents cités:
- EP-A- 0 426 511
- EP-A- 0 880 033
- WO-A-01/55747
- AU-A1- 2007 201 855
- US-A- 4 509 151
- US-A- 6 011 753
- US-A1- 2007 223 307

## Description

Le domaine de l'invention est celui de l'acquisition de données sismiques. Plus précisément, l'invention concerne les équipements pour l'analyse de fonds marins.

L'invention concerne en particulier l'industrie de la prospection pétrolière par méthode sismique, mais peut s'appliquer à tout domaine mettant en oeuvre un réseau d'acquisition de données sismiques en milieu marin.

Dans le domaine de l'invention, les opérations d'acquisition, sur le terrain, de données géophysiques, mettent classiquement en oeuvre des réseaux de capteurs (désignés par les termes « hydrophones » pour ce qui concerne l'acquisition de données en milieu marin).

Les hydrophones mentionnés précédemment, ceux-ci étant répartis le long de câbles pour former des antennes acoustiques linéaires couramment désignées par les termes « streamers » ou « flûtes sismiques ». Le réseau de flûtes sismiques est tracté par un bateau sismique.

Une flûte sismique est constituée d'un assemblage de sections individuelles instrumentées de capteurs sismiques et d'électroniques de conversion analogique numérique associées.

Le bateau sismique tracte également une ou plusieurs sources sismiques constituées d'un réseau de canons à air, canons à eau ou vibrateurs acoustiques. L'onde de pression générée par la source sismique traverse la colonne d'eau et insonifie les couches supérieures du fond marin. Une partie du signal est réfractée par les interfaces et les inhomogénéités de la croûte océanique. Les signaux acoustiques résultants sont alors détectés par les capteurs sismiques répartis sur toute la longueur des flûtes sismiques. Ces signaux acoustiques sont conditionnés, numérisés et retransmis par la télémétrie des flûtes sismiques vers le poste opérateur situé sur le bateau sismique où s'effectue le traitement des données brutes.

Pour avoir une image correcte de la cartographie du fond sous-marin de la zone d'exploration, il est important de localiser précisément les capteurs sismiques repartis le long des flûtes sismiques ainsi que la source sismique.

Cette localisation des streamers est importante, notamment pour :
- suivre la position des hydrophones pour obtenir une précision satisfaisante de l'image du fond marin ;
- détecter les mouvements des streamers entre eux ;
- suivre la navigation des streamers, en particulier en situation de contournement d'un obstacle tel qu'une barge pétrolière.

On note que les flûtes sismiques sont constituées par un assemblage de sections présentant généralement une longueur d'environ 150 mètres, les streamers pouvant présenter une longueur totale de plusieurs kilomètres (classiquement 6 à 7 kilomètres, mais pouvant aller jusqu'à 10 voire 12 kilomètres).

Différentes méthodes sont utilisées pour localiser précisément la position des capteurs sismiques repartis le long des flûtes.

Initialement, les positionnements des flûtes sismiques marines et de la source sismique étaient basés sur l'utilisation de récepteurs GPS, répartis en quelques points particuliers (bateau, bouées supports de la source sismique, bouées de tête et de queue des flûtes...), et de compas magnétiques répartis en nombre plus important le long des flûtes (ces compas permettant de déterminer les déformées des flûtes).

Actuellement, les techniques de positionnement des flûtes sismiques marines sont plus performantes. Elles utilisent toujours le positionnement GPS pour avoir le référentiel géographique absolu, mais elles y associent l'utilisation de l'acoustique sous-marine pour déterminer les distances entre des modules acoustiques montés le long des flûtes sismiques.

Ces modules acoustiques peuvent être émetteurs et/ou récepteurs et permettent de déterminer les distances entre les modules voisins situés sur les différentes flûtes.

On dispose alors pour réaliser le positionnement précis de l'ensemble des flûtes, de points de référence donnés par les récepteurs GPS et, d'un maillage de distances inter modules et donc inter flûtes.

Un problème connexe à prospection pétrolière par sismique marine 3D est la surveillance de mammifères marins pendant la campagne d'exploration. Les réglementations internationales en la matière et les recommandations des organismes compétents incitent les opérateurs de sismiques marines à réaliser parallèlement à leur campagne de mesures une surveillance continue pour détecter l'éventuelle présence de mammifères marins sur la zone d'exploration à des fins de protection.

Cette surveillance est réalisée, soit visuellement par un ou plusieurs opérateurs humains, soit en s'aidant d'un système de récepteur(s) acoustique(s) indépendant assurant les fonctions de détection passive, de classification et de localisation géographique du ou des mammifères marins.

Ces systèmes acoustiques communément appelés "PAM" (Passive Acoustique Monitoring) sont destinés à cet usage. Ils sont constitués de récepteurs acoustiques, en général une ou plusieurs flûtes dédiées à cette fonction, associés à une unité de traitement déportée, par exemple sur le navire sismique. Ils sont autonomes et peuvent ou doivent être déployés parallèlement aux flûtes sismiques.

Un équipement souvent associé à la surveillance passive de mammifères marins est le "Répulsif Acoustique" de mammifères marins. Cet équipement émet des signaux acoustiques artificiels pour éloigner les mammifères avant la mise en oeuvre d'activités supposées dangereuses pour ces espèces.

Actuellement, le positionnement des flûtes sismiques tractées par le bateau sismique d'une part, et, d'autre part, la surveillance passive des mammifères marins (PAM) ainsi que la fonction de répulsion acoustique des mammifères, sont des fonctionnalités indépendantes.

En d'autres termes, le bateau sismique tracte notamment :
- une ou plusieurs sources sismiques ;
- un réseau de flûtes sismiques, sur la longueur desquelles sont répartis les capteurs sismiques
- des transducteurs dont la fonction est de participer au positionnement des flûtes sismiques, ces transducteurs pouvant être intégrés sur les flûtes ;
- des modules acoustiques dont la fonction est de participer à la surveillance des mammifères,
- et éventuellement répulsifs acoustiques.

On comprend donc que le positionnement des flûtes sismiques et la surveillance des mammifères marins sont fonctionnellement et structurellement indépendants.

Il en résulte :
- une augmentation de la complexité de l'ensemble des moyens tractés par le bateau sismique, entraînant des efforts en conséquence en termes de logistique (stockage, déploiement, reploiement, gestion des positions en vue d'éviter les collisions ...) ;
- une augmentation de la complexité au niveau système avec la gestion des différents systèmes de positionnement des flutes sismiques, de surveillance de mammifères marins et de répulsion des mammifères marins.
- des coûts importants du fait de la multiplication des moyens mis en oeuvre.

On connaît du brevet US 4 509 151 un appareil pour localiser, classifier et identifier des animaux marins par les sons qu'ils émettent. L'appareil comprend un réseau sous-marin pouvant être tracté par un navire dans des directions variées. Le réseau est composé de sous-réseaux d'hydrophones multiples qui sont arrangés le long de chaque sous-réseau par groupes.

On connaît également la demande de brevet EP 0 880 033 relative à une antenne remorquée utilisée dans un système sonar pour la détection et/ou la localisation de sources sonores dans l'eau. L'antenne présente au moins deux tronçons acoustiques placés côte-à-côte avec un espacement déterminé dans le sens transversal, les deux tronçons étant fixés l'un à l'autre en tête et en queue à l'aide d'un élément de liaison.

L'invention a notamment pour objectif de pallier ces inconvénients de l'art antérieur.

Plus précisément, l'invention a pour objectif de proposer un système d'acquisition de données sismiques en milieu marin permettant d'intégrer plus efficacement dans le réseau tracté les fonctions et les moyens liés à la surveillance des mammifères marins.

L'invention a également pour objectif de fournir un tel système qui permette aussi d'intégrer plus efficacement la fonction de répulsion (éloignement) des mammifères marins.

L'invention a aussi pour objectif de fournir un tel système qui permette d'optimiser l'encombrement des moyens déployés et tractés par le bateau sismique.

Un autre objectif de l'invention est de fournir un tel système qui permette de réduire les efforts en logistique liés notamment au stockage et au déploiement/reploiement des moyens contribuant au positionnement des flûtes sismiques et à la surveillance des mammifères marins.

Encore un autre objectif de l'invention est de fournir un tel système qui permette d'envisager une réduction des investissements associée aux moyens contribuant au positionnement des flûtes sismiques et à la surveillance des mammifères marins.

Un objectif supplémentaire de l'invention est d'avoir une gestion de système de haut niveau qui intègre les différentes fonctionnalités (positionnement de flutes sismiques ; détection, classification et localisation de mammifères marins ; et répulsions de mammifères marins) afin de proposer aux opérateurs sismiques un système de gestion intégré et ergonomique.

Ces objectifs, ainsi que d'autres qui apparaîtront par la suite, sont atteints grâce à l'invention qui a pour objet un système d'acquisition de données sismiques en milieu marin, comprenant :
- des flûtes sismiques remorquées par un navire ;
- des moyens de détection et/ou de localisation de mammifères marins,
**caractérisé en ce que** lesdits moyens de détection et/ou de localisation de mammifères marins sont solidaires desdites flûtes sismiques.

Ainsi, grâce à l'invention, on optimise la répartition, dans le réseau tracté, des fonctions (et des moyens structurels correspondants), liées à la surveillance des mammifères marins.

En effet, l'invention permet une optimisation de l'encombrement des moyens déployés et tractés par le navire sismique.

Selon une solution avantageuse, lesdites flûtes intègrent chacune des moyens de transmission de données à un contrôleur maître embarqué sur ledit navire, lesdits moyens de détection et/ou de localisation de mammifères marins étant destinés à communiquer avec lesdits moyens de transmission de données intégrés auxdites flûtes sismiques pour transmettre des données audit contrôleur maître.

Préférentiellement, le système comprend des moyens de détection de positions desdites flûtes et en ce que lesdits moyens de transmission de données intégrés auxdites flûtes sismiques sont destinés à transmettre lesdites positions audit contrôleur maître.

De cette façon, les moyens de transmission de données intégrés aux flûtes sismiques sont, selon l'invention, mis à profit pour transmettre au contrôleur maître les données fournies par :
- les moyens de détection de position des flûtes ;
- les moyens de détection et/ou de localisation de mammifères marins.

L'invention permet donc de fournir un système présentant un niveau d'intégration supérieur à celui des systèmes antérieurs, dans la mesure où les moyens de transmission de données intégrés aux flûtes sismiques sont communs aux moyens de détection de position des flûtes et aux moyens de détection et/ou de localisation de mammifères marins.

On note que les composants permettant de détecter et/ou de localiser des mammifères marins peuvent être les mêmes (en l'occurrence les hydrophones) que ceux assurant l'acquisition de données sismiques.

De plus, une telle solution permet d'envisager une réduction des investissements, certains composants étant communs aux moyens de détection de position des flûtes et aux moyens de détection et/ou de localisation de mammifères marins, tandis qu'ils étaient doublonnés dans les systèmes de l'art antérieur.

Selon une solution avantageuse, lesdits moyens de détection et/ou de localisation de mammifères marins sont associés à des moyens de traitement de données issues desdits moyens de détection et/ou de localisation de mammifères marins, lesdits moyens de traitement étant solidaires desdites flûtes.

De cette façon, les données fournies par lesdits moyens de détection et/ou de localisation sont traitées localement, ce qui évite de transmettre des données brutes au contrôleur maître embarqué sur le navire et, par conséquent, évite de mobiliser une partie des ressources (capacités de traitement et/ou de calcul) du contrôleur maître.

Selon un premier mode de réalisation, lesdits moyens de détection et/ou de localisation de mammifères marins sont intégrés dans des modules autonomes bridés sur lesdites flûtes sismiques.

Les modules sont alors couplés mécaniquement aux flûtes sismiques, à un endroit de la flute sismique destiné à ce couplage mécanique.

Dans ce cas, lesdites flûtes sismiques intègrent au moins une bobine autorisant un couplage inductif desdits modules avec lesdits moyens de transmission de données intégrés auxdites flûtes sismiques.

On met ainsi en oeuvre une liaison sans fil entre le module et les flûtes pour ce qui concerne la transmission de données PAM à destination du contrôleur maître.

Selon un deuxième mode de réalisation, lesdites flûtes sismiques comprennent chacune une pluralité de sections, lesdits moyens de détection et/ou de localisation de mammifères marins étant intercalés entre deux desdites sections.

Dans une telle configuration, on obtient un niveau d'intégration relativement important, dans la mesure où, en plus des moyens de transmission de données communs aux moyens de détection de position des flûtes et aux moyens de détection et/ou de localisation de mammifères marins, les modules intégrant les moyens de détection et/ou de localisation de mammifères marins sont compris dans la longueur des flûtes sismiques, et non plus indépendants de celles-ci.

Une telle configuration s'avère donc particulièrement avantageuse en ce qui concerne :
- l'optimisation de l'encombrement des moyens déployés et tractés par le navire sismique ;
- l'exploitation du système PAM dans la mesure ou il n'y a plus besoin de gérer le renouvellement périodique du bloc énergie des modules ;
- les gains logistiques pouvant être obtenus, s'agissant du stockage, du déploiement/reploiement de l'ensemble des moyens composant le réseau tracté, ainsi que la gestion des positions des différents composants de ce réseau.

En effet, en ce qui concerne la gestion des positions des différents composants de ce réseau, la gestion des positions des flûtes sismiques s'opère de façon confondue à celle des positions des modules intégrant les moyens de détection et/ou de localisation de mammifères marins.

Selon une variante de réalisation, lesdits moyens de détection et/ou de localisation de mammifères marins comprennent des moyens d'alimentation électrique autonomes.

Selon une autre variante de réalisation, lesdites flûtes sismiques intègrent des moyens d'alimentation électrique, lesdits moyens de détection et/ou de localisation de mammifères marins étant alimentés par lesdits moyens d'alimentation électrique desdites flûtes.

On comprend que cette deuxième variante de réalisation, permet de réduire les coûts d'exploitation du système en éliminant la contrainte de la gestion de systèmes autonomes en énergie (changement de piles périodiques).

Selon une première approche de l'invention, lesdits moyens de détection et/ou de localisation de mammifères marins sont intégrés à des modules comprenant un tronçon intégrant des premiers moyens de réception acoustiques dédiés à une fonction de détection et/ou de localisation de mammifères marins et de deuxièmes moyens de réception acoustiques dédiés à une fonction de positionnement desdites antennes entre elles, lesdits premiers et deuxièmes moyens de réception acoustiques étant distincts.

Selon une deuxième approche de l'invention, lesdits moyens de détection et/ou de localisation de mammifères marins sont intégrés à des modules comprenant un tronçon intégrant des moyens de réception acoustique communs à une fonction de détection et/ou de localisation de mammifères marins et à une fonction de positionnement desdites flûtes sismiques entre elles.

On comprend que cette deuxième approche contribue à augmenter encore le niveau d'intégration des moyens de détection et/ou de localisation des mammifères marins et les moyens de positionnement des flûtes sismiques entre elles.

Selon une autre caractéristique de l'invention, lesdits moyens de détection et/ou de localisation de mammifères marins sont associés à des moyens d'émission de signaux acoustiques répulsifs des mammifères marins.

Dans ce cas, selon un premier mode de réalisation, lesdits moyens de détection et/ou de localisation de mammifères marins sont intégrés à des modules comprenant un tronçon intégrant des premiers moyens d'émission acoustique dédiés à une fonction de répulsion des mammifères marins et des deuxièmes moyens d'émission acoustique dédiés à une fonction de positionnement desdites flûtes sismiques entre elles, lesdits premiers et deuxièmes moyens d'émission acoustique étant distincts.

Selon un deuxième mode de réalisation, lesdits moyens de détection et/ou de localisation de mammifères marins sont intégrés à des modules comprenant un tronçon intégrant des moyens d'émission acoustique dédiés à une fonction de répulsion des mammifères marins et à une fonction de positionnement desdites flûtes sismiques entre elles.

Une fois encore, ce deuxième mode de réalisation contribue à augmenter encore le niveau d'intégration des différents composants.

Selon une variante avantageuse, le système comprend des moyens de contrôle de navigation couplés auxdites flûtes pour agir au moins sur la position en immersion (profondeur) desdites flûtes, lesdits moyens de contrôle de navigation étant intégrés à des modules comprenant lesdits moyens de contrôle de navigation.

Selon cette configuration, on fusionne dans le même ensemble :
- les fonctionnalités de positionnement acoustique des flûtes sismiques ;
- les fonctionnalités de surveillance de mammifères marins (PAM) ;
- et optionnellement les fonctionnalités de contrôle dynamique de la flûte (partie communément appelée « Bird »).

L'invention concerne également une méthode d'acquisition de données sismiques en milieu marin mettant en oeuvre un système tel que décrit précédemment, **caractérisée en ce qu**'un contrôleur maître embarqué sur ledit navire configure dynamiquement chaque module acoustique constituant le réseau pour assurer soit le positionnement acoustique des flûtes sismiques, soit la détection de mammifères marins, soit une fonction de répulsif acoustique.

D'autres caractéristiques et avantages de l'invention apparaîtront plus clairement à la lecture de la description suivante de plusieurs modes de réalisation de l'invention, donnés à titre d'exemple illustratif et non limitatif, et des dessins annexés parmi lesquels :
- la figure 1 est une représentation schématique d'un premier mode de réalisation de l'invention, selon lequel les modules de détection et/ou de localisation de mammifères marins sont bridés sur les flûtes sismiques ;
- les figures 2 et 3 sont chacune une représentation schématique d'une variante du premier mode de réalisation illustré par la figure 1 ;
- la figure 4 est une représentation schématique d'un deuxième mode de réalisation de l'invention, selon lequel les moyens de détection et/ou de localisation de mammifères marins sont intégrés dans la longueur des flûtes sismiques
- les figures 5 à 8 sont chacune une représentation schématique d'une variante du deuxième mode de réalisation illustré par la figure 4 ;
- les figures 9 à 11 sont chacune une représentation schématique d'une variante du deuxième mode de réalisation illustré par la figure 4, incluant des moyens de contrôle de navigation intégrés aux modules de détection et/ou de localisation de mammifères marins.

Tel qu'indiqué précédemment, le principe de l'invention réside dans le fait de proposer un système d'acquisition de données sismiques dans lequel des moyens de transmission de données intégrés aux flûtes sismiques sont communs à la transmission de données issues des moyens de détection de position des flûtes et à celles issues des moyens de détection et/ou de localisation de mammifères marins, ces derniers étant intégrés à des modules couplés aux flûtes sismiques.

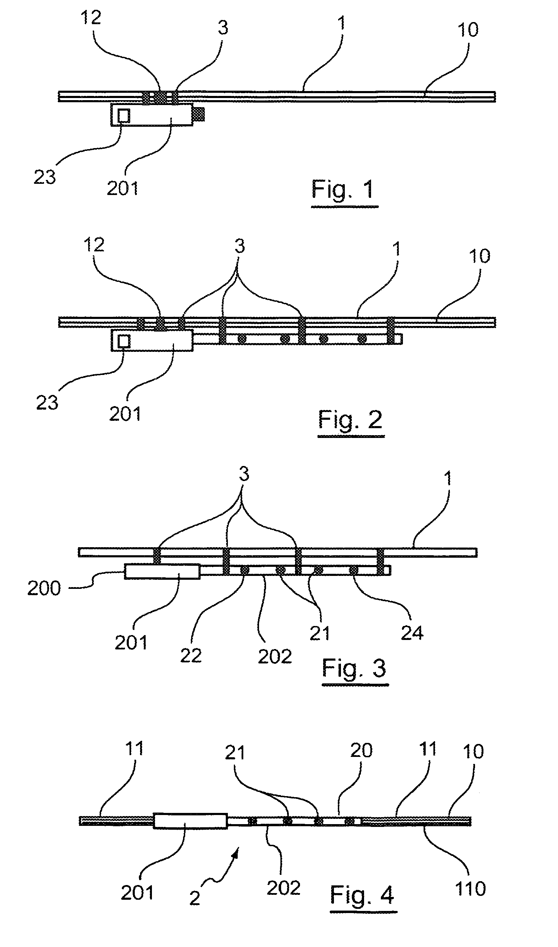

La figure 1 procure une représentation schématique d'un premier mode de réalisation de l'invention.

Selon ce mode de réalisation, des modules 2 sont bridés (« clampés » ) sur les flûtes sismiques 1 à l'aide de brides 3. Ainsi, les modules 2 s'étendent en côté des flûtes sismiques, sensiblement parallèlement à la portion correspondante des flûtes.

Les moyens de bridage sont du type de ceux actuellement utilisés pour brider les modules de positionnement acoustiques, ou les modules « célérimètre» ou les modules « compas » ou encore les modules de mesures d'immersion, modules connus de l'homme de l'art.

Selon le présent mode de réalisation, les modules 2 comprennent chacun :
- un corps 201 qui contient l'énergie, l'électronique et le système de couplage inductif ;
- d'une acoustique de réception composée d'un hydrophone surmoulé sur le corps 201.

La figure 2 illustre une variante de réalisation de ce premier mode de réalisation. Selon cette variante, les modules 2 comprennent chacun :
- un tronçon 202 intégrant des moyens acoustiques de réception 21 (en l'occurrence un groupe d'hydrophones) ;
- un corps 201 intégrant des moyens de traitement et de transmission des signaux acoustiques fournis par les moyens de réception acoustiques 21.

Par ailleurs, dans un système tel que celui illustré par la figure 1 ou celui illustré par la figure 2, on note que :
- le dialogue entre le module 2 et la flûte correspondante est réalisé par couplage inductif avec une bobine 12 (« coil ») intégrée dans les flûtes sismiques. La transmission des données est réalisée par une paire de fils 10 torsadée dite « modem », parcourant classiquement les flûtes et reliant les bobines 12 pour assurer la transmission de données fournies vers le contrôleur maître ;
- des moyens d'alimentation électrique autonomes 23 sont intégrés au module 2 et fournissent l'énergie nécessaire au fonctionnement des moyens de traitement et de transmission intégrés au corps 201, ainsi qu'aux moyens de réception acoustique 21.

L'originalité de la configuration décrite par les figures 1 et 2 réside dans le fait d'utiliser les flûtes sismiques équipées de bobines comme support fonctionnel de la fonction PAM. Cela apporte plusieurs avantages :
- grande latitude de positionnement de la fonction PAM ;
- grande facilité de mise en oeuvre ;
- dialogue temps réel à travers la paire de fils « Coil » reliant les bobines de couplage inductif de la flûte sismique.

La figure 4 illustre de façon schématique un deuxième mode de réalisation de l'invention.

Selon ce mode de réalisation, les modules 2 sont intégrés en ligne avec les flûtes sismiques, dans la longueur de celles-ci.

Pour ce faire, les flûtes sismiques étant composées d'une pluralité de sections 11, les modules 2 sont intercalés entre deux de ces sections 11.

Dans ce cas, le module 2 peut être soit autonome en énergie, soit alimenté à partir d'une ligne 110 d'alimentation électrique intégrée dans les flûtes sismiques.

Le dialogue entre le module 2 et la flûte 1 est réalisé, soit par la paire de fils 10 « modem », soit par une autre paire de fils parcourant la flûte (telle que par exemple la paire de fils de télémétrie).

Une configuration plus intégrée consiste à intégrer dans un même module les fonctionnalités de positionnement acoustique des flûtes sismiques et les fonctionnalités de surveillance de mammifères marins.

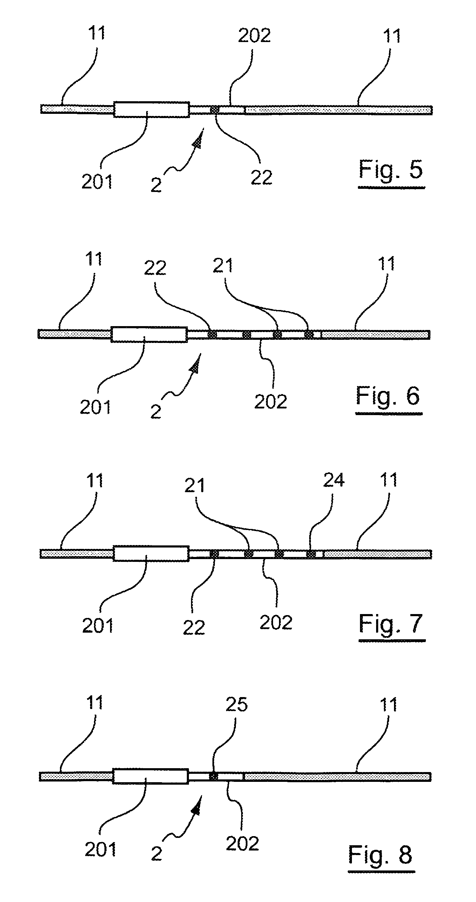

Une telle configuration est représentée de façon schématique par la figure 5.

Selon cette configuration, le module est intégré entre deux sections 11 d'une flûte sismique 1.

Le module 2 est constitué d'un corps 201 métallique (ou autre matériau) et d'un mini tronçon 202 intégrant des moyens acoustiques 22, constitués d'un transducteur pouvant, en fonction de cette configuration :
- soit assurer la fonction de positionnement acoustique des flûtes sismiques : dans ce cas, le transducteur acoustique 22 est utilisé en émission/réception ;
- soit assurer la fonction de récepteur acoustique pour la surveillance de mammifères marins : dans ce cas, le transducteur acoustique 22 est utilisé en réception seulement.

Le dialogue entre le module 2 et la flûte sismique 1 correspondante, jusqu'au contrôleur maître embarqué sur le bateau sismique, est réalisé par les paires de fils de télémétrie intégrées dans les flûtes sismiques.

L'alimentation électrique des modules 2 est réalisée à partir des lignes d'alimentation 110 intégrées dans les flûtes sismiques 1.

Une autre variante du deuxième mode de réalisation consiste à intégrer dans le mini tronçon 202 du module 2, plusieurs éléments acoustiques distincts, à savoir :
- un transducteur 22 destiné au positionnement des flûtes sismiques ;
- un ensemble d'hydrophones 21 destinés à la fonction de surveillance des mammifères marins.

Cette variante est illustrée par la figure 6.

Dans le cadre de l'invention, on peut également intégrer au module 2 la fonction de « répulsif acoustique » de mammifères marins, en plus des fonctions de positionnement acoustique des flûtes sismiques marines et de surveillance passive des mammifères marins.

Le module 2 a alors une triple fonctionnalité :
- le positionnement acoustique des flûtes sismiques marines à l'aide des transducteurs 22 ;
- la surveillance passive des mammifères marins à l'aide de récepteurs acoustiques 21 ;
- la fonction de répulsif acoustique des mammifères marins, à l'aide d'émetteurs acoustiques 24.

On note que l'émission acoustique des signaux artificiels nécessaire à la fonction de répulsif acoustique peut être réalisée soit par le transducteur utilisé pour le positionnement acoustique des flûtes sismiques, soit par un transducteur dédié à cette fonction de répulsif acoustique.

De la même manière que pour les configurations précédentes, un tel module 2 triple fonctionnalité pourrait être soit bridé sur la flûte sismique (figure 3), soit intercalé entre deux sections 11 de la flûte sismique 1 (figure 7).

La figure 8 représente une configuration encore plus intégrée du système selon l'invention, avec un module 2 « triple fonction ».

Dans cette configuration, un seul transducteur acoustique 25 assure les trois fonctions acoustiques, à savoir :
- émission/réception des signaux acoustiques destinés au positionnement des flûtes sismiques ;
- réception des signaux acoustiques émis par les mammifères marins ;
- émission des signaux acoustiques utilisés comme répulsif des mammifères marins.

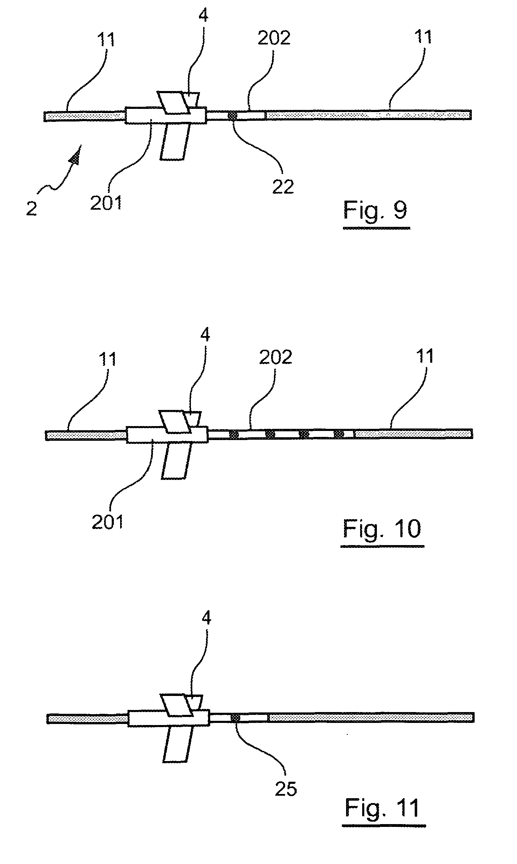

La configuration représentée par la figure 9 est une version du système selon l'invention intégrant des moyens de contrôle de navigation (classiquement désignés par le terme « Bird ») destinés à agir sur la profondeur de la flûte et éventuellement sur la position latérale des flûtes.

Dans ce cas, le module 2 intègre en plus des versions précédentes, la fonctionnalité de contrôle dynamique de la flûte sismique. Il assure dans ce cas une triple fonctionnalité :
- le positionnement acoustique des flûtes sismiques par l'intermédiaire par exemple de transducteur acoustique 22 ;
- le contrôle dynamique (navigation) de la flûte ;
- la surveillance acoustique passive de mammifères marins.

Une autre variante du système illustrée par la figure 9 est représentée schématiquement par la figure 10. Selon cette variante, le mini-tronçon 202 du module 2 intègre plusieurs éléments acoustiques, à savoir :
- un transducteur 22 destiné au positionnement des flûtes sismiques ;
- un ensemble d'hydrophones 21 destinés à la fonction PAM.
- et éventuellement un transducteur destiné à la fonction de répulsif acoustique

Les modules des systèmes illustrés par les figures 9 et 10, qui assurent la fusion des fonctionnalités de positionnement acoustique et de monitoring de mammifères marins avec optionnellement le contrôle dynamique des flûtes et de répulsif acoustique sont répartis le long des flûtes sismiques marines et permettent un maillage géographique plus ou moins dense, en fonction du nombre de modules déployés, de l'ensemble du réseau de flûtes.

Le système de Supervision situé à bord du navire peut communiquer, à travers le bus de télémétrie des flûtes sismiques, avec l'ensemble des modules déployés dans le réseau de flûtes.

Les informations concernant les temps de propagation des trajets acoustiques entre les modules répartis le long des flûtes (fonctionnalité utilisée pour le positionnement des flûtes sismiques) ainsi que les données de la fonction PAM et éventuellement les données de gestion des « Birds » et de commande des répulsif acoustiques remontent jusqu'au poste de Supervision où seront faits les traitements de plus hauts niveaux.

En ce qui concerne l'aspect système, la fusion des fonctions « matérielle » de positionnement des flûtes sismiques, de surveillance de mammifères marins et éventuellement de contrôle dynamique des flûtes se prolonge à la fusion des logiciels de Supervision de ces fonctions. En d'autres termes, un seul logiciel de Supervision assure la navigation (positionnement et éventuellement contrôle dynamique) du réseau complet de flûtes sismiques et intègre les fonctionnalités destinées au monitoring de mammifères marins (détection, classification et localisation).

L'originalité de la configuration décrite précédemment repose donc sur plusieurs caractéristiques :
- fusion dans un même module des fonctions de positionnement des flûtes sismiques, en y intégrant optionnellement le contrôle dynamique des flûtes, et de surveillance de mammifères marins ;
- fusion de ces mêmes fonctionnalités au niveau du poste opérateur, ce qui apporte une intégration maximum de ces besoins appelés à coexister, et, par conséquent, une ergonomie optimum pour les opérateurs de la prospection géophysique ;
- grande souplesse de déploiement de la fonction PAM : les modules PAM sont implicitement répartis tout au long des flûtes sismiques. En particulier le logiciel de Supervision pourra utiliser la diversité spatiale des modules pour permettre l'optimisation des traitements adaptés à la localisation des mammifères marins (fonctionnalité PAM).

En référence à la figure 11, la fonction de « répulsif acoustique » de mammifères marins peut également être associée aux fonctions précédemment citées.

Le module aura alors une triple voire quadruple fonctionnalité :
- le positionnement acoustique des flûtes sismiques marines ;
- le monitoring passif des mammifères marins ;
- la fonction de répulsif acoustique de mammifères marins ;
- et éventuellement la fonction de contrôle dynamique des flûtes sismiques.

Dans cette configuration, un seul transducteur acoustique 25 assure les trois fonctions acoustiques (de façon similaire au système de la figure 8 décrit précédemment).

De façon générale, l'émission acoustique des signaux artificiels nécessaire à la fonction de répulsif acoustique peut être réalisée, soit par le transducteur utilisé pour le positionnement acoustique des flûtes sismiques, soit par un transducteur dédié à cette fonction de répulsif. Compte tenu de la taille des acoustiques qui peuvent être intégrés dans le tronçon acoustique, le répulsif acoustique sera orienté moyenne et haute fréquence (typiquement de 10 à 100 kHz) et sera plutôt destiné à éloigner les pinnipèdes et odontocètes.

On note que la ou les sources sismiques peuvent également être utilisées en tant que répulsif acoustique basses fréquences (fréquences < à 10 kHz) pour l'éloignement des grands cétacés. Dans ce mode fonctionnement la puissance d'émission est contrôlée et les contraintes réglementaires concernant les procédés de mitigation (montée en puissance dans le temps) sont respectées.

Dans les versions du système illustré par les figures 9 à 11, qui fusionnent toutes les fonctionnalités, le logiciel système supervisera l'ensemble des fonctions :
- localisation et navigation des flûtes sismiques ;
- monitoring passif des mammifères marins (détection, classification et localisation) ;
- répulsif acoustique moyenne et basse fréquence ;
- répulsif acoustique basse fréquence ;
- processus de mitigation.
   D'un point de vue opératoire, le système déployé sera organisé en différentes phases de fonctionnement.

Par exemple, un fonctionnement typique pourrait être :
- après déploiement du réseau de flûtes, et avant l'activation des sources sismiques : monitoring du champ d'exploitation pour s'assurer de la non présence de mammifères marins ;
- si présence de mammifères marins : mise en oeuvre des procédures de mitigation, avec éventuellement l'utilisation de répulsifs moyennes et/ou hautes fréquences (modules acoustiques) et/ou basses fréquences (sources sismiques) ;
- si pas de présence de mammifères marins : phase d'exploitation sismique, avec positionnement des flûtes par le logiciel de Supervision pour la synchronisation spatio-temporelle des données sismiques. Durant toute cette phase d'exploitation sismique, le système de Supervision peut assigner des modules en mode récepteur de signaux bioacoustiques (fonction de détection PAM intégrée au niveau du module acoustique) ;
- si un signal bioacoustique est détecté par un module, l'information sera remontée jusqu'au superviseur qui déclenchera la procédure adaptée :
   - confirmation de détection du mammifère marin ;
   - localisation de la source bioacoustique ;
   - si mammifère dans la zone de nuisance, arrêt des tirs sismiques ;
   - surveillance du déplacement du mammifère ;
   - activation des procédures de classement des mammifères marins avec éventuellement utilisation de répulsifs.

Les activités sismiques sont reprises lorsque la zone est dégagée.

## Revendications

1. Système d'acquisition de données sismiques en milieu marin, comprenant:
- des flûtes sismiques (1) destinées à être remorquées par un navire de prospection pétrolière par méthode sismique, intégrant chacune des moyens de transmission (10) de données à un contrôleur maître embarqué sur un navire, les flûtes sismiques comprenant des capteurs sismiques, notamment des hydrophones, et des moyens de détection de positions desdites flûtes,
- des moyens (2) de détection et/ou de localisation de mammifères marins,
**caractérisé en ce que** lesdits moyens (2) de détection et/ou de localisation de mammifères marins sont solidaires desdites flûtes sismiques (1),
et **en ce que** lesdits moyens de transmission (10) de données intégrés auxdites flûtes sismiques sont configurées pour transmettre audit contrôleur maître:
- des données de détection et/ou de localisation de mammifères marins et
- des données de positions desdites flûtes.

2. Système selon la revendication 1, **caractérisé en ce que** lesdits moyens (2) de détection et/ou de localisation de mammifères marins sont associés à des moyens de traitement de données issues desdits moyens de détection et/ou de localisation de mammifères marins, lesdits moyens de traitement étant solidaires desdites flûtes.

3. Système selon l'une des revendications 1 et 2, dans lequel lesdits moyens (2) de détection et/ou de localisation de mammifères marins sont intégrés dans des modules autonomes bridés sur lesdites flûtes sismiques (1).

4. Système selon la revendication 3, dans lequel lesdites flûtes sismiques intègrent au moins une bobine (12) autorisant un couplage inductif desdits modules avec lesdits moyens de transmission (10) de données intégrés auxdites flûtes sismiques.

5. Système selon l'une des revendications 1 et 2, dans lequel lesdites flûtes sismiques (1) comprennent chacune une pluralité de sections, lesdits moyens de détection (2) et/ou de localisation de mammifères marins étant intercalés entre deux desdites sections (11).

6. Système selon l'une quelconque des revendications 1 à 5, dans lequel lesdits moyens de détection (2) et/ou de localisation de mammifères marins comprennent des moyens d'alimentation électrique autonomes (23).

7. Système selon l'une quelconque des revendications 1 à 5, dans lequel lesdites flûtes sismiques intègrent des moyens d'alimentation électrique, lesdits moyens de détection (2) et/ou de localisation de mammifères marins étant alimentés par lesdits moyens d'alimentation électrique (110) desdites flûtes sismiques.

8. Système selon l'une quelconque des revendications 1 à 7, dans lequel lesdits moyens de détection et/ou de localisation de mammifères marins sont intégrés à des modules comprenant un tronçon (202) intégrant des premiers moyens (21) de réception acoustique dédiés à une fonction de détection et/ou de localisation de mammifères marins et des deuxièmes moyens (22) de réception acoustique dédiés à une fonction de positionnement desdites flûtes entre elles, lesdits premiers et deuxièmes moyens de réception acoustique étant distincts.

9. Système selon l'une quelconque des revendications 1 à 7, dans lequel lesdits moyens de détection et/ou de localisation de mammifères marins sont intégrés à des modules comprenant un tronçon (202) intégrant des moyens de réception acoustique (22) communs à une fonction de détection et/ou de localisation de mammifères marins et à une fonction de positionnement desdites flûtes sismiques entre elles.

10. Système selon l'une quelconque des revendications 1 à 9, dans lequel lesdits moyens de détection et/ou de localisation de mammifères marins sont associés à des moyens d'émission de signaux acoustiques répulsifs (24) de mammifères marins.

11. Système selon la revendication 10, dans lequel lesdits moyens de détection et/ou de localisation de mammifères marins sont intégrés à des modules comprenant un tronçon (202) intégrant des premiers moyens d'émission acoustique dédiés à une fonction de répulsion de mammifères marins et des deuxièmes moyens d'émission acoustique dédiés à une fonction de positionnement desdites flûtes sismiques entre elles, lesdits premiers et deuxièmes moyens d'émission acoustique étant distincts.

12. Système selon la revendication 10, dans lequel lesdits moyens de détection et/ou de localisation de mammifères marins sont intégrés à des modules comprenant un tronçon (202) intégrant des moyens d'émission acoustique communs (25) à une fonction de répulsion de mammifères marins et à une fonction de positionnement desdites flûtes sismiques entre elles.

13. Système selon l'une quelconque des revendications 1 à 12, comprenant des moyens de contrôle de navigation (4) couplés auxdites flûtes pour agir au moins sur la position en immersion desdites flûtes, lesdits moyens de contrôle de navigation (4) étant intégrés à des modules comprenant lesdits moyens de contrôle de navigation.

14. Système selon l'une quelconque des revendications 1 à 13, dans lequel des capteurs sismiques, notamment des hydrophones, sont utilisés pour permettre de détecter et/ou localiser des mammifères marins.

15. Méthode d'acquisition de données sismiques en milieu marin mettant en oeuvre un système selon l'une quelconque des revendications 1 à 14, dans laquelle les flûtes sismiques forment un réseau de flûtes sismiques et sont remorquées par un navire de prospection pétrolière par méthode sismique, **caractérisé en ce qu'**un contrôleur maître embarqué sur ledit navire configure dynamiquement chaque module acoustique constituant le réseau pour assurer soit le positionnement acoustique des flûtes sismiques, soit la détection de mammifères marins, soit une fonction de répulsif acoustique.

## Claims

1. A system for acquiring seismic data in a marine environment, comprising:
- seismic streamers (1) which are intended to be pulled by a petroleum prospecting vessel using a seismic method, each seismic streamer including means (10) for transmitting data to a master controller on board a vessel, the seismic streamers comprising seismic sensors, in particular hydrophones, and means for detecting positions of the streamers,
- means (2) for detecting and/or locating marine mammals, **characterised in that** the means (2) for detecting and/or locating marine mammals are secured to the seismic streamers (1),
and **in that** the data transmission means (10) which are integrated in the seismic streamers are configured to transmit to the master controller:
- data relating to detection and/or location of marine mammals and
- data relating to positions of the streamers.

2. A system according to claim 1, **characterised in that** the means (2) for detecting and/or locating marine mammals are associated with means for processing data issuing from the means for detecting and/or locating marine mammals, the processing means being secured to the streamers.

3. A system according to either claim 1 or claim 2, wherein the means (2) for detecting and/or locating marine mammals are integrated in self-contained modules which are clamped to the seismic streamers (1).

4. A system according to claim 3, wherein the seismic streamers include at least one coil (12) which allows inductive coupling of the modules with the data transmission means (10) that are integrated in the seismic streamers.

5. A system according to either claim 1 or claim 2, wherein the seismic streamers (1) each comprise a plurality of sections, the means (2) for detecting and/or locating marine mammals being interposed between two of the sections (11).

6. A system according to any one of claims 1 to 5, wherein the means (2) for detecting and/or locating marine mammals comprise self-contained electrical power supply means (23).

7. A system according to any one of claims 1 to 5, wherein the seismic streamers include electrical power supply means, the means (2) for detecting and/or locating marine mammals being supplied with electrical power by the electrical power supply means (110) of the seismic streamers.

8. A system according to any one of claims 1 to 7, wherein the means for detecting and/or locating marine mammals are integrated in modules comprising a section (202) which includes first acoustic reception means (21) that are dedicated to a function for detecting and/or locating marine mammals and second acoustic reception means (22) that are dedicated to a function for positioning of the streamers in relation to each other, the first and the second acoustic reception means being different.

9. A system according to any one of claims 1 to 7, wherein the means for detecting and/or locating marine mammals are integrated in modules comprising a section (202) which includes acoustic reception means (22) that are common to a function for detecting and/or locating marine mammals and a function for positioning of the seismic streamers in relation to each other.

10. A system according to any one of claims 1 to 9, wherein the means for detecting and/or locating marine mammals are associated with means (24) for emitting acoustic signals deterring marine mammals.

11. A system according to claim 10, wherein the means for detecting and/or locating marine mammals are integrated in modules which comprise a portion (202) which includes first acoustic transmission means that are dedicated to a function of deterring marine mammals and second acoustic transmission means that are dedicated to a function of positioning of the seismic streamers in relation to each other, the first and the second acoustic transmission means being different.

12. A system according to claim 10, wherein the means for detecting and/or locating marine mammals are integrated in modules which comprise a portion (202) which includes acoustic transmission means (25) that are common to a function for repelling marine mammals and a function of positioning of the seismic streamers in relation to each other.

13. A system according to any one of claims 1 to 12, comprising navigation control means (4) which are coupled to the streamers in order to act at least on the immersion position of the streamers, the navigation control means (4) being integrated in modules comprising the navigation control means.

14. A system according to any one of claims 1 to 13, wherein seismic sensors, in particular hydrophones, are used to allow marine mammals to be detected and/or located.

15. A method for acquiring seismic data in a marine environment using a system according to any one of claims 1 to 14, wherein the seismic streamers form a network of seismic streamers and are towed by a petroleum prospecting vessel using a seismic method, **characterised in that** a master controller on board the vessel dynamically configures each acoustic module which constitutes the network in order to ensure the acoustic positioning of the seismic streamers or the detection of marine mammals or an acoustic repulsion function.

## Patentansprüche

1. System zur Erfassung seismischer Daten in der Meeresumwelt, umfassend:
- seismische Flöten (1), die dazu bestimmt sind, an ein Schiff zur Erdölsuche mittels seismischen Verfahrens angehängt zu werden, jeweils umfassend Mittel (10) zur Datenübertragung an einen Mastercontroller, der auf einem Schiff eingebaut ist, wobei die seismischen Flöten seismische Aufnehmer, insbesondere Hydrophone, und Mittel zur Erfassung der Position der Flöten umfassen,
- Mittel (2) zur Erfassung und/oder Lokalisierung von Meeressäugetieren,
**dadurch gekennzeichnet, dass** die Mittel (2) zur Erfassung und/oder Lokalisierung von Meeressäugetieren mit den seismischen Flöten (1) verbunden sind,
und dass die in die seismischen Flöten integrierten Datenübertragungsmittel (10) derart ausgeführt sind, dass sie an den Mastercontroller Folgendes übertragen:
- Erfassungs-und/oder Lokalisierungsdaten von Meeressäugetieren, und
- Positionsdaten der Flöten.

2. System nach Anspruch 1, **dadurch gekennzeichnet, dass** die Mittel (2) zur Erfassung und/oder Lokalisierung von Meeressäugetieren Datenverarbeitungsmitteln zugeordnet sind, die aus den Mitteln zur Erfassung und/oder Lokalisierung von Meeressäugetieren hervorgehen, wobei die Verarbeitungsmittel an den Flöten befestigt sind.

3. System nach einem der Ansprüche 1 und 2, wobei die Mittel (2) zur Erfassung und/oder Lokalisierung von Meeressäugetieren in autonome Module integriert sind, die an die seismischen Flöten (1) angeflanscht sind.

4. System nach Anspruch 3, wobei die seismischen Flöten mindestens eine Spule (12) umfassen, die eine induktive Kopplung der Module mit den in die seismischen Flöten integrierten Datenübertragungsmitteln (10) gestatten.

5. System nach einem der Ansprüche 1 und 2, wobei die seismischen Flöten (1) jeweils eine Vielzahl von Abschnitten umfassen, wobei die Mittel (2) zur Erfassung und/oder Lokalisierung von Meeressäugetieren zwischen zweien der Abschnitte (11) angeordnet sind.

6. System nach einem der Ansprüche 1 bis 5, wobei die Mittel (2) zur Erfassung und/oder Lokalisierung von Meeressäugetieren autonome elektrische Versorgungsmittel (23) umfassen.

7. System nach einem der Ansprüche 1 bis 5, wobei die seismischen Flöten elektrische Versorgungsmittel umfassen, wobei die Mittel (2) zur Erfassung und/oder Lokalisierung von Meeressäugetieren von den elektrischen Versorgungsmitteln (110) der seismischen Flöten gespeist werden.

8. System nach einem der Ansprüche 1 bis 7, wobei die Mittel zur Erfassung und/oder Lokalisierung von Meeressäugetieren in Module integriert sind, umfassend einen Abschnitt (202), der erste, für eine Funktion der Erfassung und/oder Lokalisierung von Meeressäugetieren bestimmte akustische Empfangsmittel (21) und zweite für eine Funktion der Positionierung der Flöten untereinander bestimmte akustische Empfangsmittel (22) integriert, wobei die ersten und zweiten akustischen Empfangsmittel unterschiedlich sind.

9. System nach einem der Ansprüche 1 bis 7, wobei die Mittel zur Erfassung und/oder Lokalisierung von Meeressäugetieren in Module integriert sind, umfassend einen Abschnitt (202), der gemeinsame akustische Empfangsmittel (22) für eine Funktion der Erfassung und/oder Lokalisierung von Meeressäugetieren und eine Funktion der Positionierung der seismischen Flöten untereinander umfasst.

10. System nach einem der Ansprüche 1 bis 9, wobei die Mittel zur Erfassung und/oder Lokalisierung von Meeressäugetieren mit Mitteln zur Entsendung von akustischen Signalen (24) zur Repulsion von Meeressäugetieren verbunden sind.

11. System nach Anspruch 10, wobei die Mittel zur Erfassung und/oder Lokalisierung von Meeressäugetieren in Module integriert sind, umfassend einen Abschnitt (202), der erste, für eine Funktion der Repulsion von Meeressäugetieren bestimmte akustische Sendemittel, und zweite, für eine Funktion der Positionierung der seismischen Flöten untereinander bestimmte akustische Sendemittel umfasst, wobei die ersten und die zweiten akustischen Sendemittel unterschiedlich sind.

12. System nach Anspruch 10, wobei die Mittel zur Erfassung und/oder Lokalisierung von Meeressäugetieren in Module integriert sind, umfassend einen Abschnitt (202), der gemeinsame akustische Sendemittel (25) für eine Funktion der Repulsion von Meeressäugetieren und eine Funktion der Positionierung der seismischen Flöten untereinander umfasst.

13. System nach einem der Ansprüche 1 bis 12, umfassend Navigationssteuermittel (4), die mit den Flöten gekoppelt sind, um auf mindestens die Eintauchposition der Flöten einzuwirken, wobei die Navigationssteuermittel (4) in Module umfassend die Navigationssteuermittel integriert sind.

14. System nach einem der Ansprüche 1 bis 13, bei dem seismische Aufnehmer, insbesondere Hydrophone, verwendet werden, um es zu ermöglichen, Meeressäugetiere zu erfassen und/oder zu lokalisieren.

15. Verfahren zur Erfassung von seismischen Daten in der Meeresumwelt unter Verwendung eines Systems nach einem der Ansprüche 1 bis 14, wobei die seismischen Flöten ein Netz von seismischen Flöten bilden und an ein Schiff zur Erdölsuche mittels seismischen Verfahrens angehängt werden, **dadurch gekennzeichnet, dass** ein Mastercontroller, der auf dem Schiff eingebaut ist, dynamisch jedes akustische Modul, welches das Netz darstellt, konfiguriert, um entweder die akustische Positionierung der seismischen Flöten oder die Erfassung von Meeressäugetieren oder eine akustische Repulsionsfunktion zu gewährleisten.
